# EUROPÄISCHE PATENTANMELDUNG

(11) **EP 3 121 459 A1**
(43) Veröffentlichungstag der Anmeldung: **25.01.2017**
(21) Anmeldenummer: 16180829.0
(22) Anmeldetag: 22.07.2016
(51) Int. Cl.: F16B 7/18, F16B 33/06, F16B 33/00, E21B 17/042, F16L 15/00

(54) **BESCHICHTUNG FÜR SCHRAUBVERBINDUNG**

(30) Priorität: 24.07.2015 DE 102015214098
(71) Anmelder: Schwindt, Sascha, 66119 Saarbrücken (DE); Schwindt, Saskia, 66265 Heusweiler (DE)
(72) Erfinder: Schwindt, Sascha, 66119 Saarbrücken (DE); Schwindt, Saskia, 66265 Heusweiler (DE)
(74) Vertreter: FDST Patentanwälte

(57) **Zusammenfassung**

Es wird eine Schraubverbindung (1), insbesondere für Rohre (5, 6), angegeben, mit einem Außengewindeteil (2) und mit einem Innengewindeteil (3), wobei auf wenigstens einer Teilfläche des Außengewindeteils (2) oder des Innengewindeteils (3) eine gläserne Beschichtung (14) mit einer Schichtdicke auf der nm-Skala, insbesondere zwischen 10 nm und 1000 nm, bevorzugt zwischen 80 nm und 200 nm, aufgebracht ist. Die Beschichtung (14) ermöglicht einen Gleitkontakt der Gewindeteile (2, 3) und verhindert ein Festfressen der Schraubverbindung (1).

## Beschreibung

Die Erfindung betrifft eine beschichtete Schraubverbindung, insbesondere eine beschichtete Schraubverbindung für Rohre, mit einem Außengewindeteil und mit einem Innengewindeteil. Weiter betrifft die Erfindung ein Rohr mit einem beschichteten Außengewindeteil und/oder mit einem beschichteten Innengewindeteil sowie ein Gestänge aus einer Anzahl solcher, miteinander verschraubter Rohre. Ferner betrifft die Erfindung ein Verfahren zur Beschichtung eines Außengewindeteil und/oder eines Innengewindeteils einer Schraubverbindung oder eines Rohres.

Verbindungsvorrichtungen mit in Gleitkontakt stehenden Außen- und Innengewindeteilen sind beispielsweise zur Verbindung der Rohre in hohlen Bohrgestängen der Öl- und Gasindustrie eingesetzt. Dort müssen hohe Drehmomente aufgewendet werden, um im eingeschraubten Zustand die Dichtflächen der Rohre dicht aufeinander zu pressen. Die Außen- und Innengewindeteile sorgen für eine mechanische Verbindung, insbesondere also durch Form- und/oder Kraftschluss, der verschraubten Bestandteile, während die bezüglich der Achse eines Bestandteils umlaufenden , insbesondere ringförmigen, Dichtflächen miteinander dichtend in Kontakt kommen. Dabei wird durch einen ausreichenden Spanndruck der beiden Bestandteile zueinander insbesondere ein dichter Metall-Metall-Kontakt zwischen den so miteinander in Berührung gebrachten, insbesondere ringförmigen, Oberflächen hergestellt. Insbesondere solche Verbindungsvorrichtungen müssen mehrmalig auf- und eingeschraubt werden. Dabei besteht die Gefahr eines unerwünschten "Festfressens".

Als Beispiel einer solchen Verbindungsvorrichtung ist in der FR 1 489 013 eine Verbindungsdichtung für Metallrohre angegeben, die in diesem Fall kegelstumpfförmige Gewinde umfasst, die ringförmige Oberflächen aufweisen, welche die Dichtheit der Verbindung gewährleisten, wenn sie am Ende des Festsetzens miteinander in Berührung kommen. Die FR 1 489 013 beschreibt aber keine besonderen Vorrichtungen, mit denen ein "Festfressen" beim Verschrauben und Festziehen dieser ringförmigen Flächen, die eine dichte Verbindung zwischen den beiden Teilen der Verbindungsvorrichtung gewährleisten sollen, verhindert werden könnte.

Üblicherweise wird ein solches Festfressen mithilfe eines geeigneten Schmiermittels, wie beispielsweise einem Compoundfett, das z.B. vom American Petroleum Institut standardisiert wurde, verhindert. Die Verwendung eines Schmiermittels hat jedoch Nachteile. Beispielsweise ist seine richtige Verteilung über die ganze Oberfläche der Verbindungsvorrichtung schwierig, so dass in bestimmte Bereiche zu viel und in andere Bereiche nicht genug oder gar kein Schmiermittel bzw. Fett gelangt. Die eingesetzten Schmiermittel neigen außerdem dazu, zusätzlich zu den Partikeln, die in diesen Gemischen bereits suspendiert sind, feste Fremdkörper zu binden, die ein dichtes Festziehen der Bestandteile der Verbindung verhindern können. Schließlich neigen die in den Compoundfetten suspendierten festen Partikel im Laufe mehrerer Ein- und Aufschraubvorgänge der Verbindungen dazu, sich an den Gewinden im Bereich der insbesondere ringförmigen Dichtflächen anzusammeln.

Zur Vermeidung eines Festfressens in den vorgenannten Verbindungsvorrichtungen kann alternativ oder zusätzlich auch eine Phosphatisierungs-Behandlung oder ein Sandstrahlen der dichtenden Oberflächen vorgenommen werden. Hierdurch werden die sich berührenden Oberflächen hinsichtlich der Vermeidung eines Festfressens bei einem häufigen Auf- und Zudrehen verbessert. Häufig begünstigt aber eine vorab vorgenommene Oberflächenbehandlung der Bestandteile der Verbindung wie eine Phosphatierungs-Behandlung ein Feuchtwerden der Wände der Bestandteile durch das Schmiermittel. Außerdem können bei den Gewinden auch "Festfressungsphänomene" in Bereichen auftreten, in denen das Außen- und das Innengewinde aneinander anliegen, insbesondere im Falle von Reibungsflächen, vor allem bei kegelstumpfförmigen Gewinden.

Die bekannten Lösungen sind demnach in vielen Anwendungsbereichen ungenügend für den gedachten Einsatz. Dies gilt insbesondere für Verbindungsvorrichtungen aus rostfreien oder hitzebeständigen Stählen oder auch aus rostfreien oder hitzebeständigen Legierungen, wie beispielsweise aus Legierungen auf Nickelbasis, bei denen eine Schmierung für die Herstellung einer dichten Verbindung ohne Gefahr des "Festfressens" nicht ausreicht. Diese Stähle oder Legierungen vertragen aber auch keine Phosphatierungsbehandlung, so dass hierdurch die Wirksamkeit einer Schmierung nicht verstärkt werden kann. In der GB 2 104 919 A wird dazu eine Oberflächenbehandlung für eine Gewindeverbindung von Rohren aus legiertem Stahl mit hohem Chromgehalt vorgeschlagen, wie sie in Ölbohrlöchern verwendet werden, wodurch das "Festfressen" verbessert werden kann.

Der Erfindung liegt daher die Aufgabe zugrunde, eine Beschichtung herzustellen, die auf Oberflächen aufgetragen werden kann und in Gleitkontakt mit Außen- und Innengewindeteilen einer Schraubverbindung, insbesondere für Rohre, durch Gewinde kommt, die eine Verwendung der Schraubverbindung ohne Einsatz eines Schmiermittels, wie z.B. eines Compoundfetts, ermöglicht.

Diese Aufgabe wird hinsichtlich einer Schraubverbindung der eingangs genannten Art dadurch gelöst, dass auf wenigstens einer Teilfläche des Außengewindeteils oder des Innengewindeteils eine gläserne Beschichtung mit einer Schichtdicke auf der nm-Skala, insbesondere zwischen 10 nm und 1000 nm, bevorzugt zwischen 80 nm und 200 nm, aufgebracht ist.

Mit anderen Worten wird eine glasartige, ultradünne Oberflächenbeschichtung, insbesondere mit einer Dicke zwischen 10 nm und 1000 nm, bevorzugt zwischen 80 nm und 200 nm, für eine Vorrichtung zum Verbinden von Gewindeteilen, insbesondere von Metallrohren, angegeben, die Oberflächen an Innen- und Außengewindebestandteilen dieser Verbindungsvorrichtung umfasst, die einander zumindest teilweise berühren, wenn der Außengewindeteil in den Innengewindeteil geschraubt wird. Anstelle eines Schmierfettes werden zumindest Teilflächen dieser Oberflächen mit der glasartigen Beschichtung versehen. Auf die Anwendung eines Schmiermittels ist gänzlich verzichtet.

Die Erfindung sieht also eine ultradünne, glasartige Beschichtung vor, die sowohl geeignet ist für das Aufbringen auf Verbindungsvorrichtungen für Rohre aus Kohlenstoffstahl, als auch auf Verbindungsvorrichtungen für Rohre aus rostfreiem oder hitzebeständigem Stahl oder auch aus rostfreien oder hitzebeständigen Legierungen, wie beispielsweise Legierungen auf Nickelbasis. Genauer gesagt wird entsprechend der Erfindung eine nanoskalige Beschichtung aus einer SiO₂ - Matrix (gläsern bzw. glasartig) eingesetzt bzw. hergestellt. Überraschend wurde dabei erkannt, dass der Oberflächenzustand einer solchen Schicht ein problemloses Gleiten der Oberflächen der Innen- und Außengewindeteile der Verbindungen selbst unter einem hohen Druck ermöglicht, der beim Festziehen am Ende des Verschraubens entsteht.

Ebenso wurde aufgefunden, dass sich durch Beschichtung mit einer glasartigen Schicht auf der nm-Skala zugleich eine gute Dichtigkeit an den insbesondere ringförmigen Dichtflächen der vorgenannten Verbindungsvorrichtungen hergestellt wird. Insbesondere ist diese Dichtigkeit unabhängig von der konkreten Form des jeweiligen Kontaktes gewährleistet.

Schließlich wurde durch eigene Versuche festgestellt, dass eine glasartige Beschichtung auf der nm-Skala auch eine Vielzahl von Ein-und Ausschraubzyklen der Verbindungsvorrichtung ohne ein Festfressen, Loslösen oder Losreißen, insbesondere an den ringförmigen Dichtflächen, und ohne Dichtigkeitsverluste aushält. Mit einer gläsernen bzw. glasartigen Oberflächenbeschichtung (also einer Beschichtung auf Basis einer SiO₂-Matrix) für eine Vorrichtung zum insbesondere dichten Verbinden durch Gewinde kann demnach auf den Einsatz von Schmiermittel verzichtet werden. Die Beschichtung besteht aus einer dünnen, glasartigen Schicht aus vernetztem Siliziumdioxid (SiO₂), die sich selbst wiederum direkt oder indirekt mit den zu schützenden bzw. beschichteten Flächen verbindet. Diese gläserne Schicht mit einer bevorzugten Schichtdicke von etwa 80 nm bis 200 nm bedarf keiner Zwischenschicht und ist als Befestigungsschicht mit der Oberfläche des zu schützenden Bestandteils fest verbunden.

Die Beschichtung wird insbesondere auf Teilflächen der Gewindeteile, und insbesondere auf eine Dichtfläche einer der beiden Bestandteile der Schraubverbindung bzw. der Verbindungsvorrichtung aufgebracht. Dabei sind in einer bevorzugten Variante die Gewinde kegelstumpfförmig bzw. weisen die hierzu komplementäre Form auf. Die Dichtfläche eines Bestandteils selbst kann unterschiedliche Geometrien aufweisen und wirkt mit einer entsprechenden, komplementären Dichtfläche des jeweils anderen Bestandteiles zusammen.

Die Beschichtung kann also auf eine oder mehrere Dichtflächen oder andere Flächen, und insbesondere auf ringförmige Flächen und ebenso auf das Gewinde eines oder beider Bestandteile bzw. auf Teile der Gewinde des Außengewindeteils und/oder des Innengewindeteils aufgebracht werden. Die Beschichtung kann generell sowohl auf die Oberflächen eines Bestandteils oder auf die Oberflächen der beiden Bestandteile der Verbindungsvorrichtung bzw. Schraubverbindung aufgebracht werden.

Bevorzugt umfasst die Beschichtung im Wesentlichen ein SiO2-Glas. Die gläserne Beschichtung ist in einer vorteilhaften Ausführungsvariante als ein organofunktionelles Silansystems auf Lösemittelbasis, insbesondere auf Wasserbasis und/oder auf Alkoholbasis aufgebracht, woraus sich durch Trocknen, Aushärten und/oder Erstarren die Beschichtung bildet. Die Beschichtungszusammensetzung umfasst insbesondere und bevorzugt ein SiO₂-erzeugendes Mittel, wobei dieses Mittel mit einem Anteil zwischen 0,1 und 50 Gew.-% bezogen auf die Gesamtzusammensetzung enthalten ist. Der Zusammensetzung können weitere Komponenten wie z.B. aliphatische und aromatische Aldehyde, Carbonsäuren oder Aminocarbonsäuren zugesetzt sein.

Die Zusammensetzung, also die Mischung der Komponenten einschließlich des Lösungsmittels, wird insbesondere bei einer Temperatur von 10°C bis 60°C hergestellt. Die SiO₂ - Matrix, also die gläserne Schicht, kann mittels eines Sol-Gel-Prozesses erzeugt werden. Dabei werden vorzugsweise Metalloxide-Xerogele aus SiO₂, R-SiOₙ, R₂SiOₙ, Al₂O₃, ZrO₂, TiO₂ oder deren Gemische verwendet, wobei R=H, Alkyl, Aryl, Epoxi-alkyl, Aminoalkyl und n = 1,5 oder 1 sein kann. Diese Gele erhält man durch die Hydrolyse und Kondensationsreaktionen von Siliziumalkoxiden. Dabei werden die Moleküle auf Grund der während des Prozesses stattgefundenen Polymerisation miteinander verbunden. Das gesamte Volumen der Sole wird dabei polymerisiert. Die polymerisierten Siliziumoxide bilden ein SiO₂-Gel. Die fortlaufende Kondensation unter Alkoholabspaltung führt zu einem spärischen Anwachsen der Partikel, bis sie sich berühren, und schließlich zur Ausbildung der nanoskaligen gläsernen Schicht auf Basis einer SiO₂-Matrix. Letztlich liegt eine formbeständige feste Phase vor, die mit einer flüssigen Phase durchdrungen sein kann.

Demnach wird die SiO₂-Matrix aus einer Vorläufersubstanz bzw. aus einem Precursor gebildet. Dem SiO₂ bildenden Precursor, der insbesondere aus der Gruppe der Alkyltriethoxosilane und/oder der Aminopropyltriethoxosilane ausgewählt ist, können bis zu 20 Gew.-% Al₂O₃, TiO₂, ZrO₂, MgO und/oder V₂O₅ bezogen auf den Gesamtanteil an SiO₂ zugefügt sein. Bevorzugt wird Tetraethoxysilan als Precursor eingesetzt. Auch können einem Sol aus Tetraethoxysilan, Trimethoxymethylsilan oder Dimethoxydimethylsilan zur Funktionalisierung aliphatische und/oder aromatische Aldehyde, Carbonsäuren und/oder Aminocarbonsäuren zugesetzt werden. Alternativ wird durch veränderte Substituenten am Precursor (R'Si(OC₂H₅)₃) das Si02-Netzwerk organisch modifiziert. Ebenfalls dafür ist die Synthese verschiedener Alkyltriethoxysilane mit Azomethinbindung durch die Umsetzung von Aminopropyltriethoxysilan mit Benzaldehydderivaten bzw. Acetylaceton genutzt.

Die Flexibilität und Porosität der Sol-Gel-Schichten lassen sich durch Modifikation der Rezepturen verändern. Ein höherer Anteil von R-SiOₙ und/oder R2-SiO₂ verbessert die Flexibilität der Schichten. Durch die Bildung von Mischoxiden unter Zugabe von Al₂O₃, TiO₂ und/oder ZrO₂ wird die Abrasionsbeständigkeit und die spezifische Härte verstärkt.

In einer bevorzugten Variante umfasst das Außengewindeteil einen kegelförmigen oder kegelstumpfförmigen Gewindeabschnitt mit Außengewinde, wobei das Innengewindeteil einen hierzu komplementären Gewindeabschnitt mit Innengewinde umfasst, in den der kegelförmige oder kegelstumpfförmige Gewindeabschnitt einschraubbar ist. Diese Variante ist bevorzugt zur Herstellung einer dichten Verbindung, insbesondere zum Herstellen einer dichten Schraubverbindung von Rohren eines hohlen Gestänges, wie eines Bohrgestänges.

Zweckmäßigerweise ist die gläserne Beschichtung auf wenigstens einem der beiden Gewindeabschnitte aufgebracht. Bereits durch eine einseitige Aufbringung der gläsernen Beschichtung können die Vorteile einer Vermeidung des Festfressens erzielt werden.

Wie bereits ausgeführt, umfasst die Schraubverbindung in einer vorteilhaften Ausführung an dem Außengewindeteil und an dem Innengewindeteil jeweils eine, insbesondere ringförmige, Dichtfläche, wobei die Dichtflächen im verschraubten Zustand aufeinander liegen und einen Innenraum gegen einen Außenraum abdichten. Die Dichtflächen liegen im eingeschraubten Zustand der Schraubverbindung unter einem axialen Spanndruck aneinander und erhalten hierdurch ihre Dichtfunktionalität. Bevorzugt ist hierbei die gläserne Beschichtung auf wenigstens einer der beiden Dichtflächen aufgebracht. Die Dichtwirkung wird hierdurch nicht negativ beeinflusst. Ein Festfressen der Dichtflächen ist verhindert, so dass beim Aufschrauben kein Losreissen oder Losbrechen erforderlich ist.

In einer zweckmäßigen Variante sind das Außengewindeteil und das Innengewindeteil jeweils an Enden von Rohren aufgebracht. Die Rohre sind dabei bevorzugt Teile eines Gestänges, insbesondere eines Bohrgestänges.

Die Erfindung betrifft des Weiteren ein Innengewinde oder Außengewindeteil einer Vorrichtung zur Verbindung von Rohren durch Gewinde, das mindestens auf einem Teil seiner Oberflächen, die geeignet sind, in Gleitkontakt mit den entsprechenden Oberflächen des anderen Teils zu kommen, eine gläserne ultradünne Oberfläche, wie vorstehend ausgeführt, umfasst. Demnach ist erfindungsgemäß auch ein Rohr mit einem Außengewindeteil und/oder mit einem Innengewindeteil vorgesehen, wobei auf wenigstens einer Teilfläche des Außengewindeteils oder des Innengewindeteils eine gläserne Beschichtung mit einer Schichtdicke auf der nm-Skala, insbesondere zwischen 10 nm und 1000 nm, bevorzugt zwischen 80 nm und 200 nm, aufgebracht ist.

Die für die Schraubverbindung und deren Ausführungsbeispiele genannten Vorteile können hierbei sinngemäß auf die beschichteten Gewindeteile und auf ein Rohr mit einem derartigen, beschichteten Gewindeteil übertragen werden.

Schließlich betrifft die Erfindung ein Verfahren zur Beschichtung eines Außengewindeteils und/oder eines Innengewindeteils einer vorstehend beschriebenen Schraubverbindung oder eines vorstehend beschriebenen Rohres, wobei eine flüssige Vorläufersubstanz, insbesondere ein organofunktionelles Silansystem auf Lösemittelbasis, insbesondere auf Alkoholbasis und/oder Wasserbasis, auf wenigstens einer Teilfläche des Außengewindeteils und/oder des Innengewindeteils aufgebracht und zu einer gläsernen Beschichtung mit einer Schichtdicke auf der nm-Skala, insbesondere zwischen 10 nm und 1000 nm, bevorzugt zwischen 80 nm und 200 nm, umgewandelt wird.

Die beschichtete Oberfläche ist insbesondere geeignet, den Gleitzustand der Gewindeteile zu erhalten, wenn diese beim Ein- oder Aufschrauben miteinander in Kontakt treten.

Die Aufbringung der glasartigen Oberflächenbeschichtung, also insbesondere der in einem flüssigen Lösemittel gelösten Vorläufersubstanz erfolgt durch Tauchen, Sprühen, Wischen, Schütten, Aufschleudern oder durch Aufbringung mit einem Pinsel. Die aufgebrachte Beschichtung setzt sich passiv insbesondere bei Raumtemperatur zur festen Phase um. Eine zusätzliche Wärmequelle ist für die Applikation grundsätzlich nicht notwendig. Um eine schnellere Umsetzung zu erreichen, besteht jedoch die Möglichkeit, unterschiedliche aktive Wärmebehandlungen durchzuführen, z.B. Mikrowellentrocknung, Infrarottrocknung, Trocknung durch Erwärmen mit einem Gaskolben, Erwärmen durch einen Heißluftfön, Trockenschrank usw. Die Beschichtung wird insbesondere durch Zersetzung, Trocknung, Aushärtung und/oder Erstarrung aus der aufgetragenen Zusammensetzung gebildet.

Die Erfindung wird anhand einer Zeichnung und den nachfolgenden Beispielen näher erläutert. Dabei zeigen:
- Fig. 1: zwei miteinander verschraubbare Rohrenden mit jeweils einem Gewindeteil, und
- Fig. 2: ein hohles Gestänge mit meiner Mehrzahl an miteinander verschraubten Rohren.

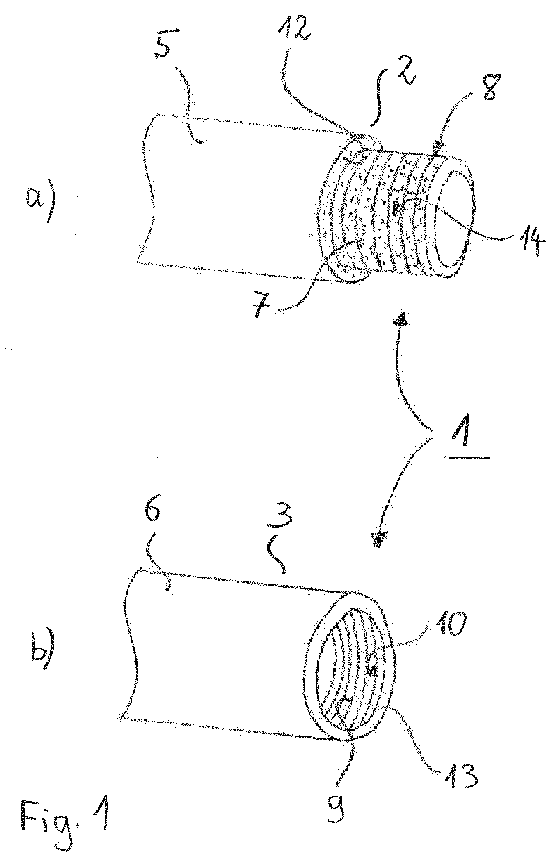

Figur 1 zeigt eine Schraubverbindung 1, die ein Außengewindeteil 2 und ein Innengewindeteil 3 umfasst, die miteinander verschraubbar sind. Das Außengewindeteil 2 ist am Ende eines ersten Rohres 5 angeordnet. Das Innengewinde 3 ist am Ende eines zweiten Rohres 6 angeordnet. Somit sind die beiden Rohre 5, 6 mittels der Schraubverbindung 1 miteinander verschraubbar.

Das Außengewindeteil 2 umfasst einen Gewindeabschnitt 7 mit einem Außengewinde 8. Das Innengewindeteil 3 umfasst einen zum Gewindeabschnitt 7 des ersten Rohres komplementären Gewindeabschnitt 9 mit einem Innengewinde 10. Der Außengewindeteil 2 ist mit seinem Außengewinde 8 in das Innengewinde 10 des komplementären Gewindeabschnitts 9 einschraubbar. Der Gewindeabschnitt 7 kann insbesondere kegelstumpfförmig ausgebildet sein.

Im eingeschraubten Zustand der Schraubverbindung 1 kommt eine erste Dichtfläche 12 am ersten Rohr 5 in Kontakt mit einer zweiten Dichtfläche 13 am zweiten Rohr 6. Die beiden Dichtflächen 12, 13 sind jeweils ringförmig ausgebildet. Unter dem Spanndruck der eingeschraubten Schraubverbindung 1 resultiert ein dichter Kontakt der beiden Dichtflächen 12, 13 aneinander. Beispielsweise ist dies ein dichter Metall-Metall-Kontakt. Um ein Festfressen der Schraubverbindung 1, insbesondere der Dichtflächen 12, 13 oder von Teilen der Gewindeabschnitte 7, 9 aneinander bzw. miteinander, unter dem hohen Spanndruck der Schraubverbindung 1 zu verhindern, ist zumindest auf Teilen des Außengewindes 8, auf der ersten Dichtfläche 12, auf Teilen des Innengewindes 10 oder auf der zweiten Dichtfläche 13 eine gläserne Beschichtung 14 aufgebracht. Die gläserne Beschichtung weist hierbei eine Schichtdicke zwischen 80 nm und 200 nm auf und umfasst eine SiO₂-Matrix bzw. ein SiO₂-Netzwerk, insbesondere ein SiO₂-Gel. Beispielsweise ist die gläserne Beschichtung 14 durch einen Sol-Gel-Prozess unter Abscheidung von SiO₂ gebildet, wobei eine SiO₂ bildende Vorläufersubstanz, beispielsweise ein Alkyltriethoxysilan auf Lösemittelbasis in flüssiger Form auf die zu beschichtenden Oberflächen aufgetragen wird. Die Auftragung der flüssigen Beschichtungszusammensetzung erfolgt beispielsweise mittels Sprühen, Tauchen, Pinseln, Aufschleudern, Schütten oder Wischen. Aus der aufgebrachten Vorläufersubstanz wird die gläserne Beschichtung 14 passiv oder mittels einer Wärmebehandlung aktiv zur gläsernen Beschichtung umgesetzt, insbesondere zersetzt, getrocknet, ausgehärtet und/oder erstarrt.

Es hat sich gezeigt, dass eine derartige gläserne, SiO₂ enthaltende Beschichtung die Gleitfunktion der ineinander schraubbaren Bestandteile erhält. Zudem bleibt die Dichtfunktion der beiden Dichtflächen 12, 13 aneinander erhalten. Jedoch ist ein Festfressen von Teilen der Schraubverbindung 1 aneinander verhindert. Auf den Einsatz eines Schmiermittels kann vollständig verzichtet werden.

Die Lösung mit der Vorläufersubstanz bzw. die flüssige Beschichtungszusammensetzung wird in einer anderen Variante alternativ oder zusätzlich zu den Dichtflächen 12, 13 auf den Umfang des Innengewindes 10 und auf den Umfang des Außengewindes 8 einer dichtenden Schraubverbindung 1 zwischen Rohren 5, 6 entsprechend Figur 1 aufgetragen.

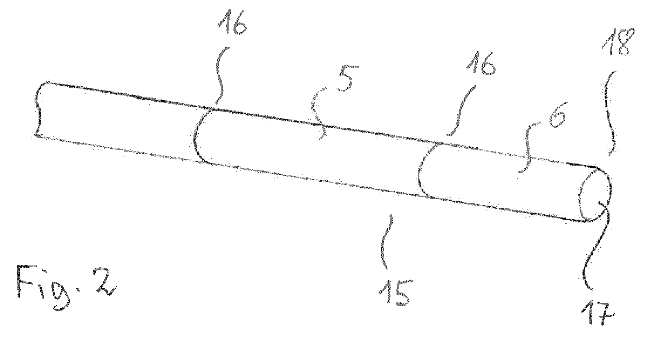

Die Rohre 5, 6 können Teile eines hohlen Gestänges 15 sein, wie dies in Figur 2 dargestellt ist. Zwischen den einzelnen Rohren 5, 6 entstehen Verbindungsstellen 16, die jeweils durch die dichtenden Schraubverbindungen 1 gebildet sind. Über die Schraubverbindungen 1 bzw. die aneinander unter Spanndruck anliegenden Dichtflächen 12, 13 ist ein Innenraum 17 des hohlen Bohrgestänges 15 gegen den Außenraum 18 abgedichtet. Das Gestänge 15 ist insbesondere als ein Bohrgestänge zum fördern fossiler Brennstoffe ausgebildet.

Die gläserne Beschichtung 14 eignet sich zum Aufbringen auf verschiedenste Schraubverbindungen, insbesondere auf verschiedenste Schraubverbindungen verschiedenster Rohre. Die Rohre bzw. Schraubverbindungen können beispielsweise und insbesondere einen Durchmesser zwischen 0,6 mm und 2000 mm aufweisen. Die Gewindesteigungen liegen bevorzugt in einem Bereich zwischen 0,25 mm und 812,5 mm. Gewindelängen zwischen 0,62 mm und 2000 mm sind dabei bevorzugt bzw. umfasst.

Die Erfindung eignet sich grundsätzlich für Rohre verschiedenster Materialien, also insbesondere Kunststoffe, Keramiken, Metalle. Bevorzugt sind Metalllegierungen, die auf spezifische Einsatzszenarien der Rohre oder der hieraus gebildeten Gestänge Rücksicht nehmen. Weiter bevorzugt sind Stahllegierungen, und insbesondere Stahllegierungen, wie sie in der Öl- und Gasindustrie für Bohrgestänge verwendet werden. Beispielsweise sind dies Duplex-Stähle und Superduplex-Stähle, wie sie insbesondere nach dem ASTM/ASME-Regelwerk bzw. nach DIN EN 10088-2/VdTÜV-Werkstoffblatt 418 bekannt sind. Insbesondere sind dabei die Duplex-Legierungen UNS S31803 und die Superduplex-Legierung UNS S32750 bevorzugt. Die nicht rostenden Duplex-Legierungen zeichnen sich durch einen zweiphasigen Gefügeaufbau aus Ferrit und Austenit aus. Weitere einzusetzende Stähle sind beispielsweise UNS 31606 bzw. SS316L oder X55/SS355 (Carbonhaltiger Stahl). Bei hohem Druck oder in kritischen Einsatzszenarien ist Edelstahl zu bevorzugen. Geeignet sind grundsätzlich Fe-Legierungen mit den Bestandteilen Cr, Ni, N, Mo, S, Mn, Si, C.

In einem Versuch weisen die Rohrenden von Rohren eines Bohrgestänges aus einer Duplex-Legierung und aus einer Superduplex-Legierung ein Außengewindeteil mit Außengewinde und ein Innengewindeteil mit Innengewinde auf. Zum Abdichten unter Spanndruck weisen beide Rohrenden zueinander komplementäre konische Dichtflächen auf. Der Durchmesser der Gewinde betrug etwa 10 cm. Sowohl auf die Gewinde als auch auf die Dichtflächen beider Rohrenden wurde eine flüssige Lösung einer SiO₂-bildenden Vorläufersubstanz, beispielsweise eine Alkyltriethoxysilan, insbesondere Tetraethoxysilan, aufgetragen. Die Auftragung wurde insbesondere durch Bepinseln vorgenommen. Alternativ kann die Auftragung aber auch durch Aufsprühen, Tauchen oder Begießen erfolgen. Nach der Auftragung der flüssigen Lösung der Beschichtungszusammensetzung wurden die Gewindeabschnitte der Rohre bei Umgebungstemperatur für einen Zeitraum von 4 Stunden getrocknet, wobei aus der aufgetragenen flüssigen Lösung ein SiO₂-Netzwerk bzw. ein SiO₂-Gel als gläserne Beschichtung gebildet wird. Durch Hitze/Wärme kann die Bildung der SiO₂-Schicht beschleunigt werden. Die Wärme kann beispielsweise mit einer elektrischen Heizung eingebracht werden. Nach Abschluss der Umsetzung waren die Oberflächen der jeweiligen Gewinde und die konischen Dichtflächen der Rohrenden jeweils mit einer glasartigen Schicht versetzt. Die Dicke dieser Schicht betrug zwischen 80 und 500 nm.

Anschließend wurden die Rohrenden durch Verschrauben der Gewinde miteinander verbunden. Die Verschraubung erfolgte hierbei mit einem Drehmoment von 42 Nm unter Anlage der komplementären Dichtflächen. Es wurde die Dichtigkeit der Schraubverbindung im eingeschraubten Zustand unter Überdruck entsprechend der für das Bohrgestänge geforderten Bedingungen gemessen und bestätigt.

Anschließend wurden mehrere Zyklen von Auf- und Zuschrauben der beiden Rohre durchgeführt, und jeweils die Dichtigkeit überprüft und bestätigt. Ein Aufschrauben der Schraubverbindung war jeweils mit 20 Nm möglich, ohne dass sichtbare Schäden an dem Gewinde entstanden sind. Insgesamt wurden 20 derartige Zyklen durchgeführt. Es wurde kein Festfressen der Verbindung festgestellt. Die Dichtigkeit der Verbindung blieb erhalten und das Gewinde wurde weder innen noch außen beschädigt.

### Bezugszeichenliste

- 1: Schraubverbindung
- 2: Außengewindeteil
- 3: Innengewindeteil
- 5: erstes Rohr
- 6: zweites Rohr
- 7: Gewindeabschnitt
- 8: Außengewinde
- 9: komplementärer Gewindeabschnitt
- 10: Innengewinde
- 12: erste Dichtfläche
- 13: zweite Dichtfläche
- 14: gläserne Beschichtung
- 15: Gestänge
- 16: Verbindungsstelle
- 17: Innenraum
- 18: Außenraum

## Patentansprüche

1. Schraubverbindung (1), insbesondere für Rohre (5, 6), umfassend ein Außengewindeteil (2) und ein Innengewindeteil (3), wobei auf wenigstens einer Teilfläche des Außengewindeteils (2) oder des Innengewindeteils (3) eine gläserne Beschichtung (14) mit einer Schichtdicke auf der nm-Skala, insbesondere zwischen 10 nm und 1000 nm, bevorzugt zwischen 80 nm und 200 nm, aufgebracht ist.

2. Schraubverbindung (1) nach Anspruch 1, wobei die Beschichtung (14) im Wesentlichen ein SiO₂-Glas umfasst.

3. Schraubverbindung (1) nach Anspruch 1 oder 2,
wobei die gläserne Beschichtung (14) durch Trocknen, Aushärten und/oder Erstarren eines, insbesondere organofunktionellen, Silansystems auf Lösemittelbasis, insbesondere auf Alkoholbasis, gebildet ist.

4. Schraubverbindung (1) nach einem der vorhergehenden Ansprüche,
wobei das Außengewindeteil (2) einen kegelförmigen oder kegelstumpfförmigen Gewindeabschnitt (7) mit Außengewinde (8) umfasst, und wobei das Innengewindeteil (3) einen hierzu komplementären Gewindeabschnitt (9) mit Innengewinde (10) umfasst, in den der kegelförmige oder kegelstumpfförmige Gewindeabschnitt (7) einschraubbar ist.

5. Schraubverbindung (1) nach Anspruch 4,
wobei die gläserne Beschichtung (14) auf wenigstens einem der beiden Gewindeabschnitte (7, 9) aufgebracht ist.

6. Schraubverbindung (1) nach einem der vorhergehenden Ansprüche,
wobei diese an dem Außengewindeteil (2) und an dem Innengewindeteil (3) jeweils eine Dichtfläche (12, 13) umfasst, und wobei die Dichtflächen (12, 13) im verschraubten Zustand aufeinander liegen und einen Innenraum (17) gegen einen Außenraum (18) abdichten.

7. Schraubverbindung (1) nach Anspruch 6,
wobei die gläserne Beschichtung (14) auf wenigstens einer der beiden Dichtflächen (12, 13) aufgebracht ist.

8. Schraubverbindung (1) nach einem der vorhergehenden Ansprüche,
wobei das Außengewindeteil (2) und das Innengewindeteil (3) jeweils an Enden von Rohren (5, 6) aufgebracht sind.

9. Schraubverbindung (1) nach Anspruch 8, wobei die Rohre (5, 6) Teile eines Gestänges (15), insbesondere eines Bohrgestänges, sind.

10. Rohr (5, 6) mit einem Außengewindeteil (2) und/oder mit einem Innengewindeteil (3), wobei auf wenigstens einer Teilfläche des Außengewindeteils (2) oder des Innengewindeteils (3) eine gläserne Beschichtung (14) mit einer Schichtdicke auf der nm-Skala, insbesondere zwischen 10 nm und 1000 nm, bevorzugt zwischen 80 nm und 200 nm, aufgebracht ist.

11. Verfahren zur Beschichtung eines Außengewindeteils (2) und/oder eines Innengewindeteils (3) einer Schraubverbindung (1) nach einem der Ansprüche 1 bis 9 oder eines Rohres (5, 6) nach Anspruch 10, wobei eine flüssige Vorläufersubstanz, insbesondere ein organofunktionelles Silansystem auf Lösemittelbasis, insbesondere auf Alkohol- und/oder Wasserbasis, auf wenigstens einer Teilfläche des Außengewindeteils (2) und/oder des Innengewindeteils (3) aufgebracht und zu einer gläsernen Beschichtung (14) mit einer Schichtdicke auf der nm-Skala, insbesondere zwischen 10 nm und 1000 nm, bevorzugt zwischen 80 nm und 200 nm, umgewandelt wird.

12. Verfahren nach Anspruch 11,
wobei die flüssige Vorläufersubstanz durch Tauchen, Sprühen, Wischen, Pinseln und/oder Schütten auf die Teilfläche aufgebracht wird.

13. Verfahren nach Anspruch 11 oder 12,
wobei die aufgebrachte Vorläufersubstanz passiv und/oder aktiv zu der gläsernen Beschichtung (14) zersetzt, getrocknet, ausgehärtet und/oder erstarrt wird.
